# EUROPEAN PATENT SPECIFICATION

(11) **EP 1 901 847 B1**
(45) Date of publication and mention of the grant of the patent: **08.04.2015**
(21) Application number: 06774517.4
(22) Date of filing: 30.06.2006
(51) Int. Cl.: B01L 3/00, G01N 15/14

(54) **MICROFLUIDIC HEMATOLOGY ANALYZER**
MIKROFLUIDISCHES HÄMATOLOGIE-ANALYSEGERÄT
ANALYSEUR HÉMATOLOGIQUE MICROFLUIDIQUE

(30) Priority: 01.07.2005 US 696162 P
(43) Date of publication of application: 26.03.2008
(73) Proprietor: Honeywell International Inc., Morristown, NJ 07960 (US)
(72) Inventor: PADMANABHAN, Aravind, Plymouth, Minnesota 55446 (US); CABUZ, Cleopatra, Eden Prairie, Minnesota 55347 (US)
(74) Representative: Buckley, Guy Julian
(86) International application number: PCT/US2006/026212
(87) International publication number: WO 2007/005974

(56) References cited:
- DE-A1- 3 127 560
- JP-A- 63 165 480
- JP-A- 2002 243 572
- US-A- 3 731 524
- US-A- 4 664 056
- US-A- 5 315 861
- US-A- 5 726 404
- US-A- 5 924 294
- US-A- 5 939 326
- US-A1- 2003 083 685
- US-A1- 2004 202 581
- US-A1- 2004 259 241
- US-A1- 2005 073 686
- US-A1- 2005 105 077
- US-A1- 2005 106 739
- US-A1- 2005 106 742

## Description

### Background

The present invention pertains to flow metering in hematology analyzers.

Patents and applications related to the present invention may include: U.S. Patent No. 6,382,228, issued May 7, 2002, and entitled "Fluid Driving System for Flow Cytometry"; U.S. Patent No. 6,597,438, issued July 22, 2003, and entitled "Portable Flow Cytometry"; U.S. Patent No. 6,970,245, issued November 29, 2005, and entitled "Optical Alignment Detection System; U.S. Patent No. 6,549,275, issued April 15, 2003, and entitled "Optical Detection System for Flow Cytometry"; U.S. Patent No. 5,836,750, issued November 17, 1998, and entitled "Electrostatically Actuated Mesopump Having a Plurality of Elementary Cells"; U.S. Patent Application No. US 2005/0118723, filed December 30, 2004, and entitled "Optical Detection System with Polarizing Beamsplitter; U.S Patent Application No. US 2005/0243304, filed May 16, 2005, and entitled "Cytometer Analysis Cartridge Optical Configuration"; and U.S. Patent Application No. US 2008/0195020, filed April 25, 2005, and entitled "A Flow Control System of a Cartridge". Further relevant prior art is disclosed in US 2005/0105077, US 5,939,326 and US 2005/073686.

### Summary

The present invention may involve direct flow monitoring and measuring of portions of hematology analyzers improving the accuracy of certain items such as blood counts per unit volume. Also, various checks of the analyzers or cytometers may be effected.

### Brief Description of the Drawing

Figure 1 is a block diagram of a particle counting and size measurement system;
Figure 2 shows a portion of an illustrative blood analysis cartridge for white blood cells;
Figure 3 shows a portion of the an illustrative blood analysis cartridge for red blood cells;
Figure 4 shows a portion of the illustrative blood analysis cartridge for hemoglobin;
Figure 5 is a diagram of a flow sensor used for in the present system;
Figure 6 is a block diagram with flow sensing for compensating processor outputs of the hematology analyzer;
Figure 7 is a block diagram with flow sensing and a closed loop to control flow to the hematology analyzer;
Figure 8 shows a setup for a zero flow check of a closed off channel;
Figure 9 shows a setup for an analyzer and cartridge interface check;
Figure 10 shows a setup for a pressure and/or flow rate check for a fluidic circuit;
Figure 11 shows a sensor setup for a fluid type and quality check;
Figure 12 shows a setup for a backflow check (not contemplated by the claims);
Figure 13 shows a setup for a dry qualification of a fluidic cartridge (not contemplated by the claims);
Figure 14 shows a setup for a temperature exposure limits check for a fluidic circuit (not contemplated by the claims); and
Figure 15 shows a setup for off-cartridge flow sensing (not contemplated by the claims).

### Description

The present invention generally relates to sample analyzers, and in particular, to sample analyzers with removable and/or disposable cartridges for use at the point of care of a patient such as in a doctor's office, in the home, or elsewhere in the field. By providing a removable and/or disposable cartridge with all of the needed reagents and/or fluids, the sample analyzer can be reliably used outside of the laboratory environment, with little or no specialized training. This may, for example, help streamline the sample analysis process, reduce the cost and burden on medical or other personnel, and increase the convenience of sample analysis for many patients, including those that require relatively frequent blood monitoring/analysis.

An approach which permits rapid and efficient particle discrimination in a particle-suspension sample is flow cytometry. In this approach, a suspension of particles, typically cells in a blood sample, may be transported through a flow channel where the individual particles in the sample are illuminated with one or more focused light beams. The interaction of the light beam(s) with the individual particles flowing through the flow channel may be detected by one or more light detectors. Commonly, the detectors may be designed to measure light absorption or fluorescence emission, at specific beam or emission wavelengths, and/or light scattering at specific scattering angles. Thus, each particle that passes through the flow channel may be characterized as to one or more features related to its absorption, fluorescence, light scattering or other optical or electrical properties. The properties that are measured by the detectors may allow each particle to be mapped into a feature space whose axes are the light intensities or other properties which are measured by the detectors. In an ideal approach, the different particles in the sample map into distinct and non-overlapping regions of the feature space, allowing each particle to be analyzed based on its mapping in the feature space. Such analysis may include counting, identifying, quantifying (as to one or more physical characteristics) and/or sorting of the particles.

In one illustrative example may be a sample analyzer which is provided that has a removable cartridge that receives a collected sample, such as a collected whole blood sample, and once the removable cartridge is installed and the analyzer is activated, the analyzer and cartridge may automatically process the sample and the analyzer may provide sufficient information for the user to make a clinical decision. In some examples, the analyzer displays or prints out quantitative results (e.g., inside and/or outside of a predefined range), such that no further calculations or interpretation is required by the user.

The sample analyzer may be used to, for example, determine the number and/or types of white blood cells in a blood sample. In one illustrative example, the analyzer includes a housing and a removable fluidic cartridge, wherein the housing is adapted to receive the removable fluidic cartridge. In some cases, the removable fluidic cartridge is a disposable cartridge. In an illustrative example, the removable fluidic cartridge may include one or more reagents (e.g., sphering agents, lysing reagents, stain, and/or diluents, one or more analysis channels, one or more flow sensors, one or more valves, and/or a fluidic circuit that is adapted to process (e.g., sphere, lyse, stain, or other) a sample and deliver processed sample(s) to the appropriate analysis channel on the cartridge. To support the card, the housing may include, for example, a pressure source, one or more light sources, one or more light detectors, a processor and a power source. The pressure source may provide appropriate pressure(s) to the removable fluidic cartridge ports to drive the fluids as required through the fluidic circuit. The one or more light sources of the analyzer may be used to interrogate the prepared sample in at least selected analysis channels of the removable cartridge, and the one or more light detectors of the analyzer may detect the light that passes through, is absorbed by and/or is scattered by the sample. The processor may be coupled to at least some of the light sources and detectors, and may determine one or more parameters of the sample. In some examples, the one or more analysis channels on the removable fluidic cartridge may include one or more flow cytometry channels. In some illustrative examples, a whole blood sample may be provided to the removable fluidic cartridge, and the removable cartridge may be adapted to perform a blood analysis.

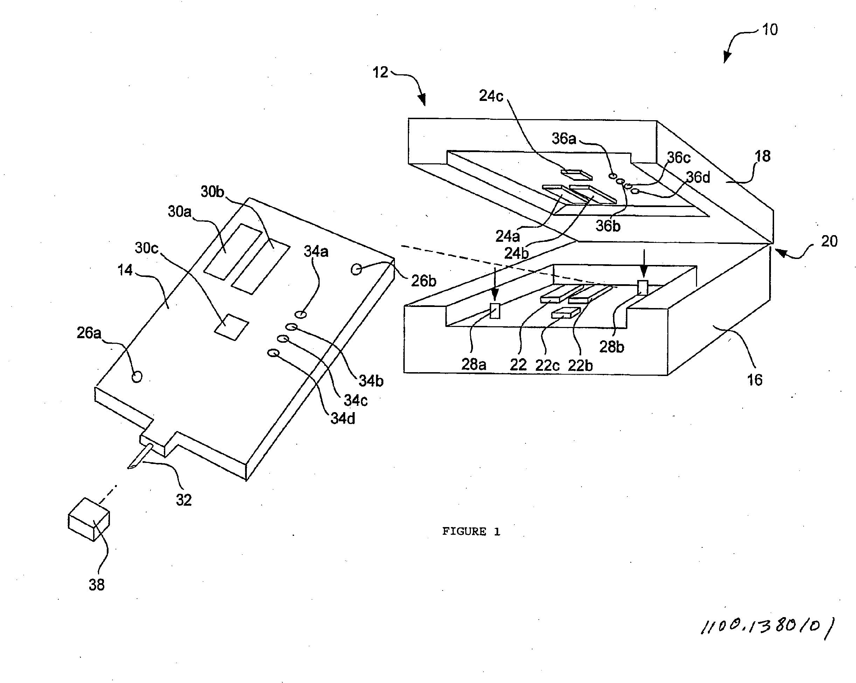

Figure 1 is a perspective view of an illustrative sample analyzer 10 and cartridge 14. The illustrative sample analyzer 10 may include a housing 12 and the removable or disposable cartridge 14. The illustrative housing 12 may include a base 16, a cover 18, and a hinge 20 that attaches the base 16 to the cover 18, but this is not required. In the illustrative example, the base 16 includes a first light source 22a, a second light source 22b, and a third light source 22c, along with associated optics and the necessary electronics for operation of the sample analyzer. There may be more or less light sources. Each of the light sources may be a single light source or multiple light sources, depending on the application. In some cases, the overall dimensions of the housing may be significantly less than one-quarter cubic foot. Likewise, the overall weight of the housing may be significantly less than less than one pound.

The illustrative cover 12 may include a pressure source (e.g., pressure-chambers with control microvalves), a first light detector 24a, a second light detector 22b, and a third light detector 22c, each with associated optics and electronics. There may be more or less detectors. Each of the light detectors may also be a single light detector or multiple light detectors, depending on the application. Polarizers and/or filters may also be incorporated, depending on the application.

The illustrative removable cartridge 14 may be adapted to receive a sample fluid via a sample collector port, which in the illustrative example, includes a lancet 32. The lancet 32 may be retractable and/or spring loaded, in some examples. A cap 38 may be used to protect the sample collector port and/or lancet 32 when the removable cartridge 14 is not in use.

In the illustrative example, the removable cartridge 14 may perform a blood analysis on a whole blood sample. The lancet 32 may be used to prick the finger of the user to produce a sample of blood, which through capillary action, may be drawn into an anti-coagulant coated capillary in the removable cartridge 14. The removable cartridge 14 may be constructed with fluidic circuits, some of which are fabricated using a laminated structure with etched channels. However, it is contemplated that the removable cartridge 14 may be constructed in any suitable manner including by injection molding or any other suitable manufacturing process or method.

During use, and after a blood sample has been drawn into the removable cartridge 14, the removable cartridge may be inserted into the housing when the cover 18 is in the open position. In some cases, the removable cartridge 14 may include holes 26a and 26b for receiving registration pins 28a and 28b in the base 16, which may help provide alignment and coupling between the different parts of the instrument. The removable cartridge 14 may also include a first transparent flow stream window 30a, a second transparent flow stream window 30b and a third transparent window 30c, which are in alignment with the first, second and third light sources 22a, 22b and 22c, and the first, second and third light detectors 24a, 24b and 24c, respectively.

When the cover is moved to the closed position, and the system is pressurized, the cover 18 may provide controlled pressures via pressure providing ports 36a, 36b, 36c, and 36d to pressure receiving ports 34a, 34b, 34c and 34d, respectively, in the illustrative removable cartridge 14. It is contemplated that more or less pressure providing and pressure receiving ports may be used, depending on the application. Alternatively, or in addition, it is contemplated that one or more micro-pumps, such as electrostatically actuated meso pumps, may be provided on or in the removable cartridge 14 to provide the necessary pressures to operate the fluidic circuit on the removable cartridge 14. Some illustrative electrostatically actuated meso pumps may be described in, for example, U.S. Patent Numbers 5,836,750, 6,106,245, 6179,586, 6,729,856, and 6,767,190 . Once pressurized, the illustrative instrument may perform a blood analysis on the collected blood sample.

The present system may provide a complete blood count (CBC) card based on a micro-scale flow cytometer or hematology analyzer for obtaining one or more of the following items including red blood cell (RBC) counts, sphering RBCs, platelet counts, lysis of RBCs, multi-part differential counts of white blood cells (WBCs), hemoglobin absorbence-based measurements, various additional indices of RBCs, platelets, WBCs, hemoglobin, and so forth, plus hydrodynamic focusing to create single-file streams of cells, and a pneumatic fluid driver system. Additional items may be provided by and/or be a part of the present system. A cytometer and a hematology analyzer might be regarded as the same or similar systems.

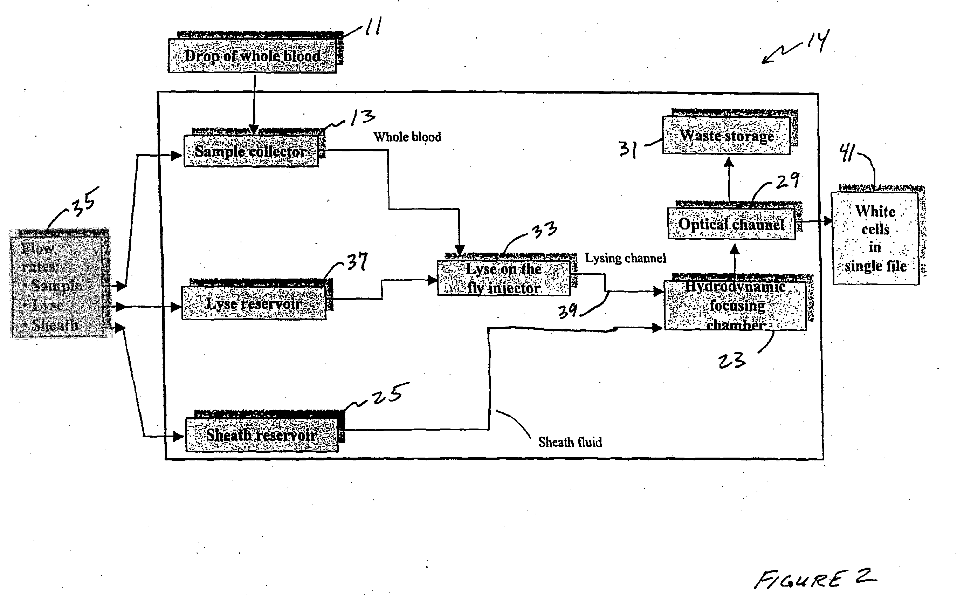

Figure 2 is a diagram showing some aspects of an illustrative example of a WBC portion of cartridge or card 14. One may start with a sample of whole blood 11 to a sample collector 13. The blood may be pushed on to a lyse on the fly injector 33. The flow rates for pushing the sample, and also the lysing and sheath fluids may be provided by a pump mechanism or flow rate control box 35. Lysing fluid for the lyse on the fly injector may come from a lyse reservoir 37. The lyse fluid and blood may proceed through a lysing channel 39 to a hydrodynamic focusing chamber 23. A sheathing fluid may go from a sheath reservoir 25 to the hydrodynamic focusing chamber 23 to aid in aligning white cells in a single file 41 through an optical channel 29 for detection and analysis. After the cells have proceeded to optical channel 29, the cells and fluid may move to a waste storage 31.

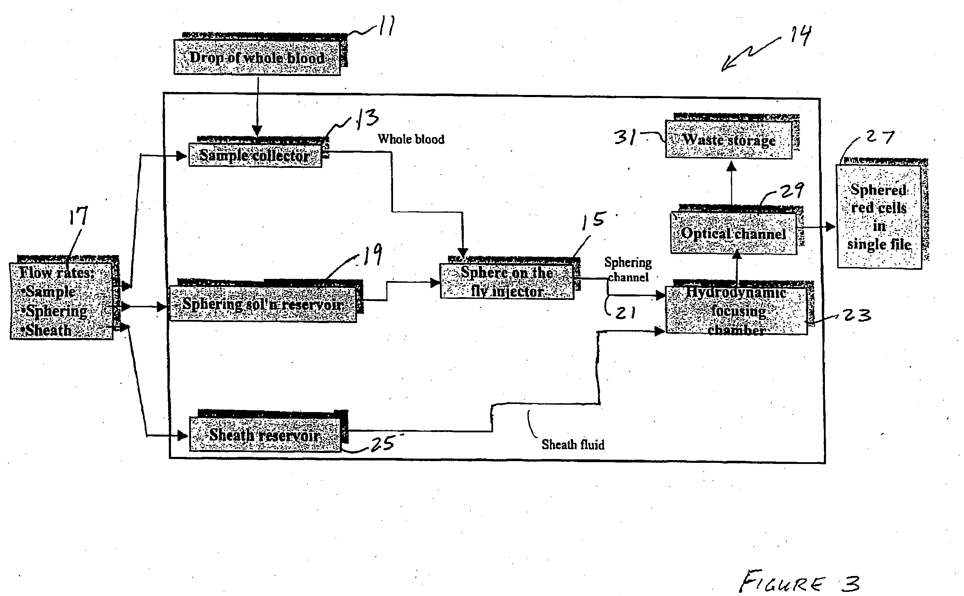

Figure 3 is a diagram showing some of the aspects of an illustrative example of an RBC portion of cartridge or card 14. This card 14 may be similar to the WBC card 14 except that it may be designed for RBC analysis. Similarly, instrument 10 may be designed for RBCs. One may start with a sample of whole blood 11 going to a sample collector 13. The blood may be pushed to a sphere on the fly injector 15. The flow rates for pushing the sample, and also for the sphering and sheath fluids, may be provided by a pump mechanism or flow rate control box 17. Sphering fluid for the sphere on the fly injector 15 may come from a sphering solution reservoir 19. The solution and blood may proceed through a sphering channel 21 to a hydrodynamic focusing chamber 23. A sheathing fluid may go from a sheath reservoir 25 the hydrodynamic focusing chamber 23 to aid in aligning the sphered red cells in single file 27 through an optical channel 29 for detection and analysis. After the cells have proceeded through optical channel 29, the cells and fluid may move on to a waste storage 31.

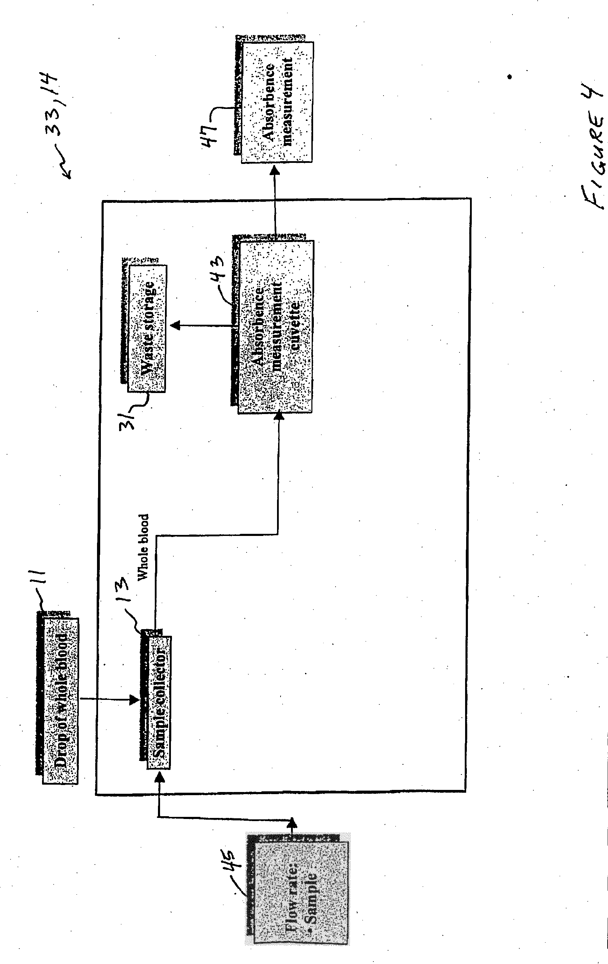

Figure 4 is a diagram showing some aspects of an illustrative example of a hemoglobin (HGB) card 33 or HGB portion of cartridge or card 14. This card may be a substitute for the WBC card 14 except it is designed for HGB analysis. Similarly, instrument 10 may be designed for HGB measurement. One may start with a sample of whole blood 11 to a sample collector 13. The blood may be pushed on to an absorbence measurement cuvette 43. The flow rate for pushing the sample may be provided by a pump mechanism or flow rate control box 45. The blood may proceed through the absorbence measurement cuvette 43, which may provide an absorbence measurement 47: After the measurement, the blood may proceed on to a waste storage 31.

Hematology analyzers and flow cytometers (viz., analyzers) may use syringe pumps in open loop and do not measure flow rates of the various reagents and drive fluids. The use of a flow sensor in such analyzers may be useful to improve overall analyzer system accuracy. Direct and local measurements of flow may provide a basis for obtaining more precise and accurate flow rates and blood counts per unit volume with the present system. Miniaturized hematology analyzers that use disposable analysis cards may need flow sensors to allow for flow rate volume error compensation. This would be essential towards developing a hematology analyzer for providing tests that may be waived under the Clinical Laboratory Improvement Amendments of 1988 (CLIA) law. An analyzer capable of providing such waived tests will need self-diagnostics capabilities to check, detect and correct for bubbles, flow leaks, occlusions, and so on.

Development of a miniaturized, low cost, ultrasensitive and stable liquid flow sensor may permit the measurement of flow rates and flow volume (dose) in hematology analyzers. The use of a flow sensor in conjunction with a closed loop pumping system may permit compensation for flow rate errors and changes. The flow sensor may also be as an instrumentation diagnostics sensor for detecting bubbles, occlusions, and flow leaks by being appropriately positioned in the instrument or in the disposable card. A flow sensor capable of measuring very slow flow rates, having a small volume and using little power for the present invention is noted herein.

There has been an increasing need for accurate measurement of the flow rates of fluids (i.e., liquids and gases) for medical, industrial, life sciences and commercial applications. The desired flow rates may range from nL/min for drug delivery, life sciences analytical instrumentation, and robotic liquid handling systems to mL/min or even liters/min for dialysis machines and other industrial applications. The present microfluidics applications may use some form of precision fluid metering or fluid dosing that needs to be accomplished by sensors that are ultra small (chip size less than 25 mm²), that consume low power (less than 75 mW), with high accuracy (better than 2 percent), and fast response speeds (faster than 1 millisecond).

Flow rate may be measured using either a direct or indirect measurement technique. Flow rate has been measured indirectly usually by measuring static properties and then making a calculation. A classic method is to measure the amount of time required to fill a known volume. The greatest advantage of this approach is that the static properties may be known with great precision and be traceable to international standards. The calculations are simple and based on proven physical laws, so confidence in the result is high. There are disadvantages of this approach. A significant one may be the inability to know much about flow rates that vary with time. Additionally, faster measurements may have poorer precision. Thus, this technique is best suited where flow rates are constant (or where average flow is the desired output) and where response time/speed is not an issue.

Another method of indirect flow measurement may use the principle that flow in a confined space is proportional to a pressure drop. A differential pressure sensor may be used to measure pressure drop over a construction, which includes the restriction due to a length of pipe. This method may overcome the limitations (in time-volume methods) of varying flow rates and long response times but at the expense of more complex calculations, larger potential external errors and larger perturbations of the media. Greater precision may be obtained by smaller restriction, but that directly changes flow characteristics.

There has been increasing interest in measuring very low flows on a practical, outside the laboratory, basis. For gases this may be less than 1 Liter per minute and for liquids less than 1 µL per minute. The errors inherent to the indirect methods may be greatly magnified at these low flows while the signals are reduced. To avoid such issues, direct measurement of flow rate may be provided in the present system.

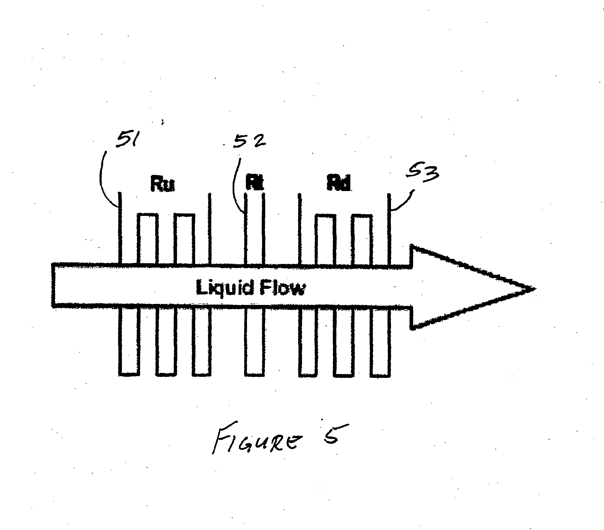

A liquid flow sensor may use proven micro electromechanical systems (MEMS) technology to deliver fast and accurate flow rate measurements, including those of very small rates, in a very small package size. As shown in Figure 5, such flow sensor may use a thermal-based technology where the thermally isolated heater (Rt) 52 is heated above ambient and where liquid flow is proportional to the temperature difference between the upstream (Ru) 51 and downstream (Rd) 53 temperature sensors located on either side of the heater. Calibration curves for the sensor may vary depending on the thermal conductivity of the liquid.

An example flow sensor may be specifically designed for applications requiring accurate flow measurements at extremely low flow rates from 1 nL/min to 50 µL/min. This sensor may be used for feedback control loops operating in this region. The sensor may feature fast response time and automatic temperature compensation. This flow sensor may use MEMS-based thermal anemometry technology to measure the mass flow rate of liquids of an isolated flow channel. Such sensor may be available from Honeywell International Inc. of Morristown, NJ. Other similar flow sensors and also appropriate pressure sensors may be available from this company.

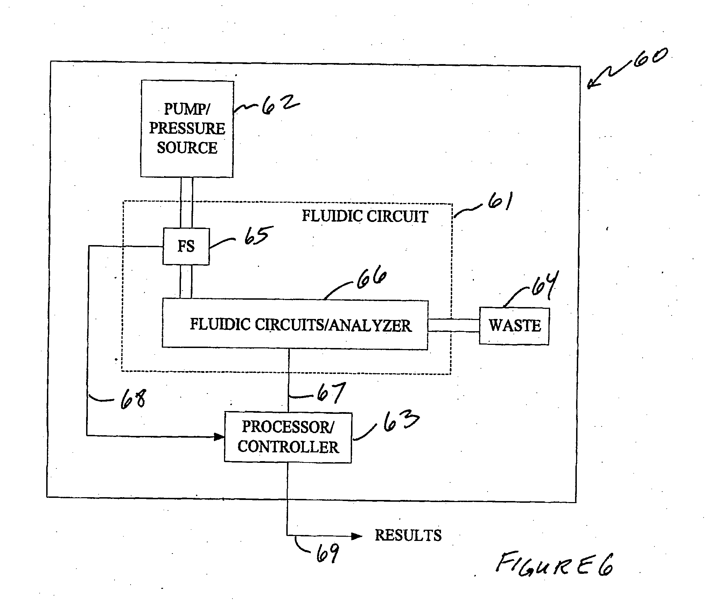

Figure 6 is a diagram of an example analyzer system 60 (e.g., a cytometer or hematology analyzer), having a fluidic circuit 61, a pump pressure source 62 connected to a flow sensor 65, and a processor/controller 63 and a waste reservoir 64 connected to the fluid circuits/analyzer 66. The fluidic circuit 61 includes the flow sensor 65 connected the fluid circuits/analyzer 66. This arrangement may permit local and direct flow rate measurements. Source 62 may provide a fluid through the flow sensor 65 to the fluid circuits/analyzer 66. Signals 67 about the fluid may go from analyzer 66 to the processor/controller 63. A signal 68 indicating a rate of fluid flow to the analyzer 66 may go from flow sensor 65 to processor 63. Results from the signals 67 from analyzer 66 to processor 63 may be corrected as a function of the sensed flow rate from flow sensor 65. Processor 63 may then output corrected results 69, which may include blood counts, such as the number of cells per unit volume.

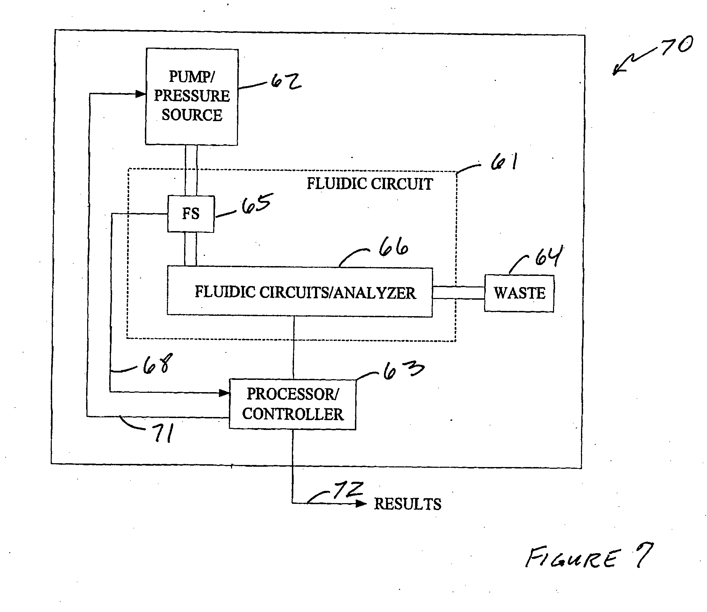

Figure 7 is a diagram of an example analyzer system 70 (e.g., a cytometer or hematology analyzer), having similar components as analyzer system 60, also permitting local and direct flow rate measurements. However, processor 63 may provide a feedback signal 71 to the pump/pressure source 62 resulting in closed loop control of the flow rate provided by the pump/pressure source 62 as sensed by the flow rate sensor 65 via signal 68. Processor 63 may then provide results 72 based on the closed loop control, which may include blood counts, such as the number of cells per unit volume.

A purpose of the present system, 60 and 70, with the local and direct measurements of the flow sensor, is to obtain accurate counts per unit volume. For instance, an optical portion of the system may provide a number of cells per second from a sample. This datum may be divided by the present flow sensor output, for instance, in microliters per second to obtain cells per microliter.

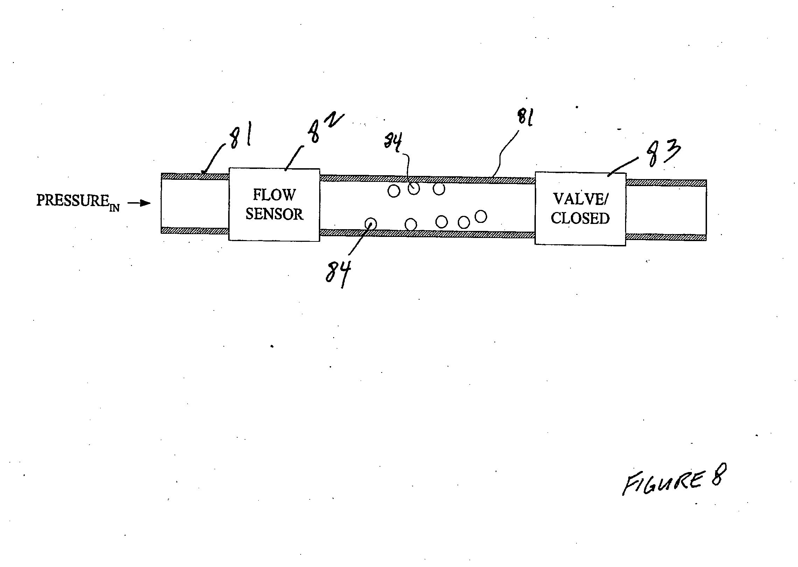

Figure 8 shows an approach for a zero flow check. A fluid, e.g., a liquid, may be injected to a channel 81 at a pressure_{IN}. There may be a flow sensor 82 in the channel 81. Further down the channel may be a valve 83 which is closed. With valve 83, a flow rate detected by flow sensor 82 upon application of pressure an input of channel 82 filled with a liquid should be zero. If the sensor 82 does not read zero at that time, then there may be bubbles 84 or leak(s) present in the channel. This check may assume the walls of channel 81 to be relatively non-compliant, e.g., stiff.

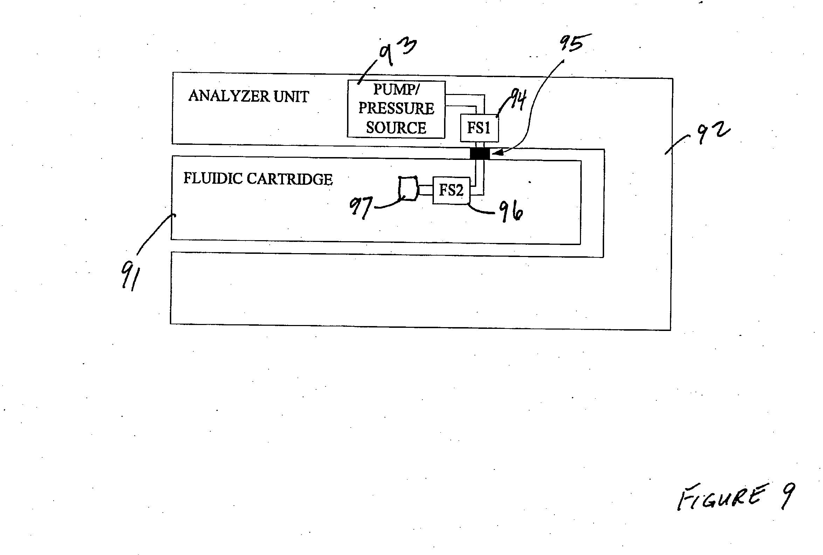

Figure 9 shows an approach for an interface leak between an analyzer unit 92 and a fluidic cartridge 91. There may be a pump/pressure source 93 having an output connected to a flow sensor 94 which in turn is connected to an interface 95 between the analyzer 93 and the cartridge 91. A flow sensor 96 may be connected between a fluidic circuit 97 and the interface 95. A flow rate detected by flow sensor 94 should match a flow rate detected by flow sensor 96 unless a leak is present at the interface 95.

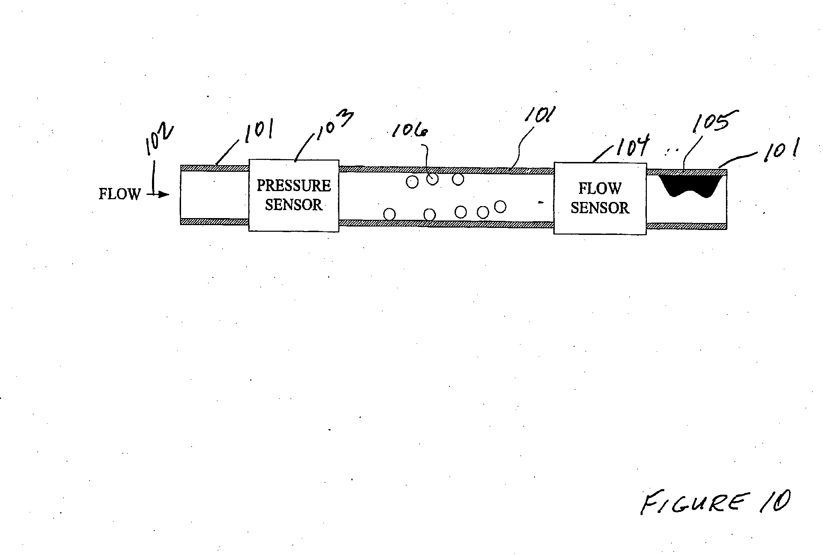

Figure 10 shows an approach for a pressure/flow rate check. A channel 101 may have an input flow 102. A pressure sensor 103 and a flow sensor 104 may be placed in channel 101. A ratio of a pressure detected by the pressure sensor 103 and a flow rate detected by the flow sensor 104 should be within a predetermined range unless there is a partial or full blockage 105, bubbles 106 or other anomaly in the channel 101.

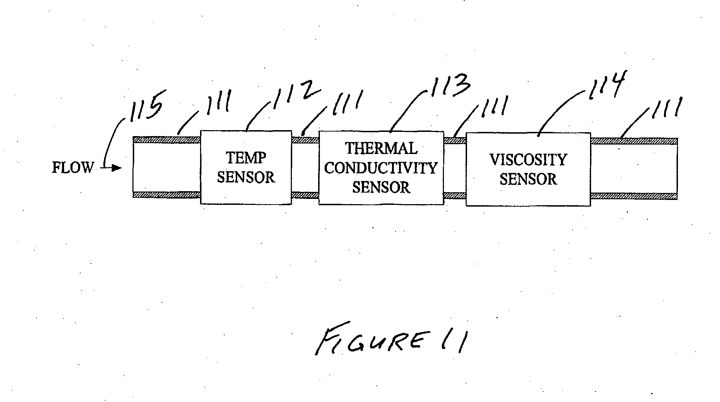

Figure 11 shows an approach for a fluid check. A flow channel 111 may have a temperature sensor 112, a thermal conductivity sensor 113 and a viscosity sensor 114 in place. A flow 115 of fluid may be entered into channel 111. The temperature, thermal conductivity, viscosity and other properties, as indicated by sensors 112, 113, 114 and other sensors, of the fluid passing through the flow channel 111 may be detected, and with pertinent calculations, the fluid type and its properties should be as expected. If not, then the fluid may be of an improper type, may have absorbed humidity, may have bacteria growth in it, may not be properly mixed, may have salts settled out, may have deteriorated due to expired shelf life, and/or so on.

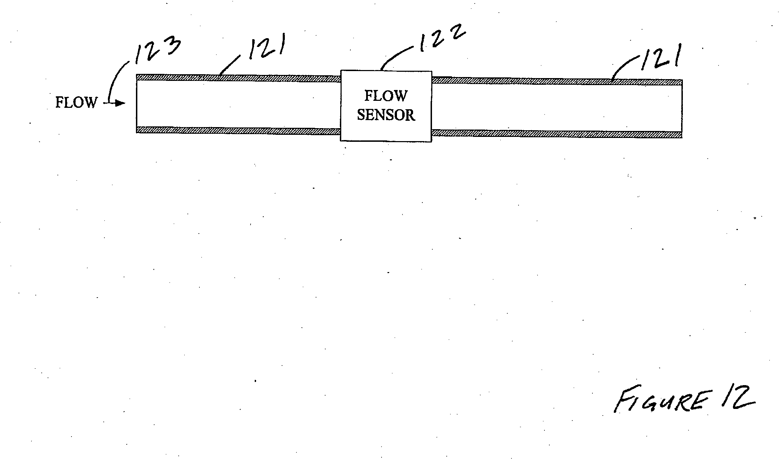

Figure 12 shows an approach for a backflow check. There may be a channel 121 in a fluidic circuit. A flow sensor 122 may be placed in the channel 121 with a flow 123 going through the channel. The flow sensor 122 may detect backflow in the sensor 122, which in many cases, may be undesirable.

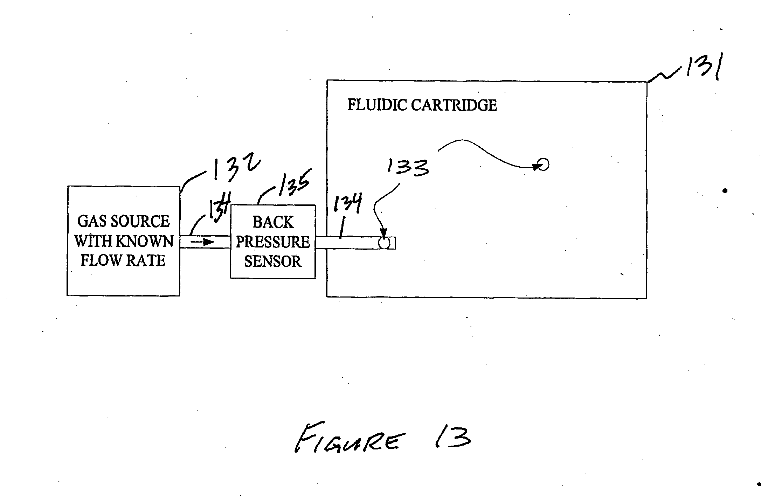

Figure 13 shows an approach that may be used for a dry qualification of a fluidic cartridge 131. There may be a gas source 132 connected to a port 133, the fluidic cartridge 131 via a channel or tube 134, and a backpressure sensor 135. The gas source 132 may pump a known flow rate of gas, such as nitrogen, into a port 133 of the fluidic cartridge 131. The measured backpressure, as indicated by sensor 135, may be determined as to whether it is within a specified "good" range. The gas source 132 may pump a known pressure of gas, such as nitrogen, into a port 133 of the fluidic cartridge 131, and with a flow rate sensor in place of pressure sensor 135, one may determine whether a measured flow rate is within a specified "good" range.

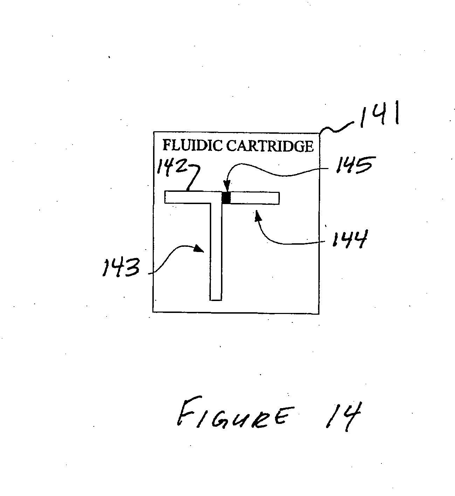

Figure 14 shows an approach for doing a temperature exposure limits check. In a fluidic cartridge 141 circuit, there may be an input channel 142 connected to a normal flow channel 143 and to a bypass channel 144. Placed at an entry of the bypass channel 144 may be a blocking wax, or other suitable material, temperature fuse 145. One may use this approach to determine whether the fluidic cartridge 141 has been exposed to temperatures outside of specified temperature exposure limits. As to a high temperature limit check, the temperature fuse 145 may open up the entry of the bypass channel 144 (e.g., by melting of the wax) when the cartridge 141 is exposed to a temperature above the high temperature limit. This opening of the bypass channel 145 may cause an error detectable by a cartridge analyzer when the cartridge 141 is inserted into the analyzer.

As to a flow temperature limit, the temperature fuse 145 may involve water or other suitable material, such as a material that shrinks, which does not return to its original size when exposed to a temperature below the low temperature limit. When the cartridge 141 is exposed to such temperature, the fuse 145 may be affected so as to open up the bypass channel 145. This opening of the bypass channel 145 may cause an error detectable by a cartridge analyzer when the cartridge 141 is inserted into the analyzer.

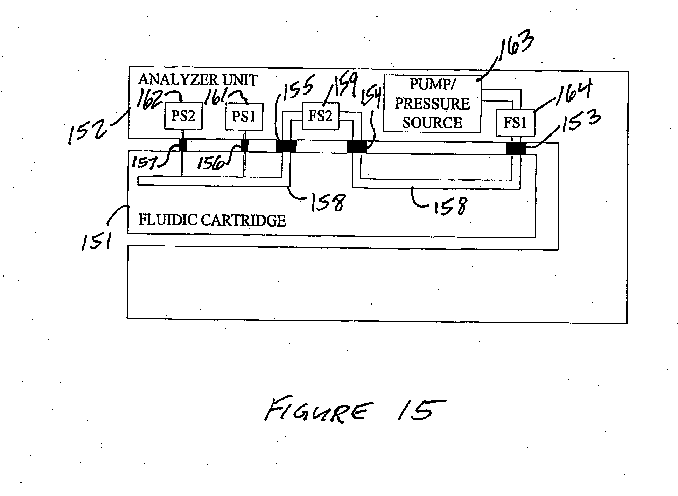

Figure 15 shows an approach for off-cartridge flow sensing. The Figure shows the cartridge 151 connected to a cartridge analyzer unit 152. There may be interfaces 153, 154 and 155 between ports of the cartridge 151 and analyzer unit 152. There may be additional or alternative interfaces 156 and 157 between ports of the cartridge 151 and analyzer unit 152. On-cartridge flow rate detection may use off-cartridge sensors. An on-cartridge flow channel 158 may be routed off-cartridge to an off-cartridge flow sensor 159 via interfaces 154 and 155, respectively, for flow measurements. Alternatively, or in addition, two or more off-cartridge pressure sensors 161 and 162 may be fluidly connected to two points along the on-cartridge flow channel 158 via interfaces, 156 and 157, respectively, to detect the flow rate in the channel 158. Also, an off-cartridge pump/pressure source 163 via an off-cartridge flow sensor 164 and the interface 153 may provide a fluid flow for the on-cartridge flow channel 158.

## Claims

1. A microfluidic analyzer system (60) comprising:
a fluidic circuit (61) having an input port;
a flow sensor (65) configured to also function as an instrumentation diagnostics sensor for detecting bubbles, occlusions, and flow leaks, the flow sensor (65) connected to the input port;
a pump/pressure source (62) having an output connected to the flow sensor (65);
a processor (63) connected to the flow sensor (65) and the fluidic circuit (61);
a flow channel with a temperature sensor (112),
a thermal conductivity sensor (113) and
a viscosity sensor (114); and
wherein:
a flow rate at the flow sensor (65) is sent to the processor (63);
a result in count per time at the fluidic circuit (61) is sent to the processor (63);
the processor (63) performs result correction on the result in count per time in accordance with the flow rate; and
the fluidic circuit (61) is of a hematology analyzer.

2. The system (60) of claim 1, wherein:
the flow rate is volume per time;
a result from the processor (63) is a count per volume.

3. The system (60) of claim 1,
wherein:
the processor (63) provides a signal to the pump/pressure source (62);
the processor (63) performs closed-loop control of a flow rate, according to the flow sensor (65), provided by the pump/pressure source (62).

## Patentansprüche

1. Mikrofluidisches Analysesystem (60), umfassend:
einen Fluidkreis (61) mit einem Eingangsanschluss;
einen Durchflusssensor (65), der dafür ausgelegt ist,
auch als instrumenteller Diagnosesensor zum Detektieren von Blasen, Verstopfungen und Durchflusslecks zu fungieren, wobei der Durchflusssensor (65) an den Eingangsanschluss angeschlossen ist;
eine Pumpe/Druckquelle (62) mit einem Ausgang, der an den Durchflusssensor (65) angeschlossen ist;
einen Prozessor (63), der an den Durchflusssensor (65) und den Fluidkreis (61) angeschlossen ist;
einen Durchflusskanal mit einem Temperatursensor (112),
einen Sensor für thermische Leitfähigkeit (113) und
einen Viskositätssensor (114); und wobei:
eine Durchflussrate an dem Durchflusssensor (65) an den Prozessor (63) gesendet wird;
ein Ergebnis in Anzahl pro Zeit in dem Fluidkreis (61) an den Prozessor (63) gesendet wird;
der Prozessor (63) eine Ergebniskorrektur an dem Ergebnis in Anzahl pro Zeit gemäß der Durchflussrate durchführt; und
der Fluidkreis (61) Bestandteil eines Hämatologieanalysators ist.

2. System (60) nach Anspruch 1, wobei:
die Durchflussrate Volumen pro Zeit ist;
ein Ergebnis von dem Prozessor (63) eine Anzahl pro Volumen ist.

3. System (60) nach Anspruch 1,
wobei:
der Prozessor (63) der Pumpe/Druckquelle (62) ein Signal bereitstellt;
der Prozessor (63) eine geschlossene Regelung einer Durchflussrate, die von der Pumpe/Druckquelle (62) bereitgestellt wird, gemäß dem Durchflusssensor (65) durchführt.

## Revendications

1. Système (60) d'analyseur microfluidique comportant :
un circuit fluidique (61) doté d'un orifice d'entrée ;
un capteur (65) de débit configuré pour faire également fonction de capteur de diagnostics d'instrumentation en vue de détecter des bulles, des occlusions et des fuites d'écoulement, le capteur (65) de débit étant relié à l'orifice d'entrée ;
une pompe / source de pression (62) dotée d'une sortie reliée au capteur (65) de débit ;
un processeur (63) relié au capteur (65) de débit et au circuit fluidique (61) ;
un conduit d'écoulement doté d'un capteur (112) de température ;
un capteur (113) de conductivité thermique ; et
un capteur (114) de viscosité,
un débit au niveau du capteur (65) de débit étant envoyé au processeur (63) ;
un résultat en comptage par unité de temps au niveau du circuit fluidique (61) étant envoyé au processeur (63) ;
le processeur (63) effectuant une correction de résultat sur le résultat en comptage par unité de temps en fonction du débit ; et
le circuit fluidique (61) faisant partie d'un analyseur d'hématologie.

2. Système (60) selon la revendication 1 :
le débit étant un volume par unité de temps ;
un résultat provenant du processeur (63) étant un comptage par unité de volume.

3. Système (60) selon la revendication 1 :
le processeur (63) transmettant un signal à la pompe / source de pression (62) ;
le processeur (63) effectuant une régulation en boucle fermée d'un débit, selon le capteur (65) de débit, fourni par la pompe / source de pression (62).
